# EUROPEAN PATENT APPLICATION

(11) **EP 2 757 778 A1**
(43) Date of publication of application: **23.07.2014**
(21) Application number: 13275012.6
(22) Date of filing: 16.01.2013
(51) Int. Cl.: H04N 5/76, H04N 5/765, H04N 5/781, H04N 5/64, H04N 21/40, H04N 21/41, H04N 21/4147, H04N 21/4223, H04N 21/422, H04N 21/426, H04N 21/432, H04N 21/433, H04N 21/436, H04N 21/443, H04N 21/81, H04N 5/222, H04L 29/12, H04L 12/46, H04L 29/06

(54) **Digital video audio player recorder device**

(71) Applicant: Ramdeo, Pradeep, New York, NY 10472 (US)
(72) Inventor: Ramdeo, Pradeep, New York, NY 10472 (US)
(74) Representative: Wilson Gunn

(57) **Abstract**

A video audio player recorder device which includes a housing. A hard drive is built-in the housing. A wireless receiver is built in the housing and is electrically connected to the hard drive. The wireless receiver can receive media information from a Wi-Fi network and a built-in data streaming software allows downloading the media information to the hard drive for storage. The built-in data streaming software allows the hard drive to play back the media information to a remote television set or computer.

## Description

### BACKGROUND OF THE INVENTION

Field of the invention:

The present invention relates to a digital video recorder, and more particularly, a digital video audio player recorder device.

Many individuals enjoy watching movies and listening to music. Currently, a media collection of a person is often in the form of CD's and DVD's. These discs tend to consume valuable space in the home and can even become misplaced throughout the years. They are also prone to damage and can be rendered useless, Some discs can only be viewed in a specific type of player. A more efficient option is needed.

The digital video audio player recorder device will assist a person in managing, viewing and storing, their favorite movies, videos, photos, music and more. The present invention affords the person access to their digital media library at all times without the need of a computer to store and manage their media library. The person is able to store their entire media collection on the device and is even able to record television shows, movies and etc. for playback at any time from any location. The device eliminates the need to purchase and store CD's, DVD's, and other forms of optical media types, instead digital Movies, Music and etc. may be purchased online and downloaded to the DV-PR .

The present invention uses a Data storage Device, such as a hard disk drive, Solid State Drive, Hybrid drive and etc. to save a large variety of media information that can be accessed at any time from any location via the Internet [or other methods] and using a Computer, Smart phone, Smart tv or other compatible devices.

### Description of the Prior Art:

Numerous innovations for video recording systems have been provided in the prior art that will be described. Even though these innovations may be suitable for the specific individual purposes to which they address, however, they differ from the present invention.

A FIRST EXAMPLE, U.S. Patent Office Publication No. 2007/0172212, Published on 07-26-2007, to Miyagawa teaches when a preprogrammed recording is set, a recording medium to be used for the preprogrammed recording is specified using an identifier. In a case where the recording medium with the specified identifier is not attached to the drive unit when a content is to be recorded, the content is recorded onto a relief recording medium. If the recording medium with the specified identifier is attached to the drive unit after the content has already been recorded onto the relief recording medium, the content is dubbed onto the recording medium with the specified identifier.

A SECOND EXAMPLE, U.S. Patent Office Publication No. 2009/0129758, Published on 05-21-2009, to Fuji teaches a video recording device which includes: a first identification block that reads video information from a first recording medium in which video information on an analog television broadcast is stored, and identifies the broadcasting format of the read video information; a recording execution block that records the video information, which is read from the first recording medium, in a second recording medium other than the first recording medium; a second identification block that when the video information is recorded in the second recording medium by the recording execution block, identifies the broadcasting format of the video information to be recorded in the second recording medium; and a format decision block that decides whether the broadcasting format identified by the second identification block agrees with the broadcasting format identified by the first identification block. When the format decision block decides that the broadcasting formats do not agree with each other, the recording execution part records the video information in the second recording medium according to the broadcasting format identified by the first identification block.

A THIRD EXAMPLE, U.S. Patent Office Publication No. 2009/0136215, Published on 05-28-2009, to Barton et al. teaches a digital video recorder (DVR) system with an integrated DVD recording device accepts TV input streams in a multitude of forms. Analog TV streams are converted to an MPEG formatted stream for internal transfer and manipulation, while pre-formatted MPEG streams are extracted from the digital TV signal and presented in a similar format. Indexes within the MPEG stream are determined and saved at predefined intervals and are stored on a hard disk along with the MPEG program material and used to create navigation packets when writing to a DVD inserted in an integrated DVD player/recorder. When a program is requested for display from the hard disk or the integrated DVD player/recorder, the program material are extracted from the appropriate source and reassembled into an MPEG stream which is sent to a decoder. The decoder converts the MPEG stream into TV output signals and delivers the TV output signals to a TV monitor. User control commands are accepted which affect the flow of the MPEG stream allowing the user to view stored programs with special functions: reverse, fast forward, play, pause, index, fast/slow reverse play, and fast/slow play. The user can select program material stored on the hard disk to be written to a DVD and can also select program material stored on a DVD to be transferred to the hard disk.

A FOURTH EXAMPLE, U.S. Patent Office Publication No. 2009/0320073, Published on 12-24-2009, toReisman teaches systems and methods for navigating hypermedia using multiple coordinated input/output device sets. Disclosed systems and methods allow a user and/or an author to control what resources are presented on which device sets (whether they are integrated or not), and provide for coordinating browsing activities to enable such a user interface to be employed across multiple independent systems. Disclosed systems and methods also support new and enriched aspects and applications of hypermedia browsing and related business activities.

A FIFTH EXAMPLE, U.S. Patent Office Publication No. 2010/0118194, Published on 05-13-2010, to Kimura teaches according to one embodiment, a video display device that has a connection unit configured to connect to a plurality of external instruments via a network, a receiving unit configured to receive, from the plurality of external instrument connected to the video display device via the connection unit, standard compatibility information indicating that the external instrument meets the mutual controllability standards, a display unit configured to display video information output by one of the plurality of external instruments and a selection unit configured to select one of the plurality of external instruments, corresponded to information based on the standard compatibility information, connected to the connection unit as an output source of video information to be displayed on the display unit.

It is apparent now that numerous innovations for video recording systems have been provided in the prior art that are adequate for various purposes. Furthermore, even though these innovations may be suitable for the specific individual purposes to which they address, accordingly, they would not be suitable for the purposes of the present invention as heretofore described.

### SUMMARY OF THE INVENTION

AN OBJECT of the present invention is to provide a video audio player recorder device that avoids the disadvantages of the prior art.

ANOTHER OBJECT of the present invention is to provide a video audio player recorder device that is simple and inexpensive to manufacture.

STILL ANOTHER OBJECT of the present invention is to provide a video audio player recorder device that is simple to use.

BRIEFLY STATED, STILL YET ANOTHER OBJECT of the present invention is to provide a video audio player recorder device which comprises a housing. A hard drive is built in the housing. A wireless receiver is built in the housing and is electrically connected to the hard drive. The wireless receiver can receive media information from a Wi-Fi network and download the media information to the hard drive for storage. The hard drive can play back the media information to a remote television set or computer.

The novel features which are considered characteristic of the present invention are set forth in the appended claims. The invention itself, however, both as to its construction and its method of operation, together with additional objects and advantages thereof, will be best understood from the following description of the specific embodiments when read and understood in connection with the accompanying drawing.

### BRIEF DESCRIPTION OF THE DRAWING

The figures of the drawings are briefly described as follows:
Figure 1 is a block diagram showing the various components of the present invention;
Figure 2 is a perspective view of the present invention; and
Figure 3 is a perspective view showing the present invention in use.

### REFERENCE NUMERALS UTILIZED IN THE DRAWING

- **110**: video audio player recorder device
- **112**: housing of device **110**
- **114**: hard drive of device **110** [Data Storage Device]
- **116**: wireless receiver of device **110**
- **118**: Wi-Fi network'
- **120**: television set
- **122**: computer
- **123**: person
- **124**: CD/DVD player/burner of device **110**
- **126**: digital camera of device **110**
- **128**: USB port, of device **110**
- **130**: home cable system
- **132**: SD port of device **110**
- **134**: internet
- **136**: remote control unit of device **110**

### DETAILED DESCRIPTION OF THE PREFERRED EMBODIMENT

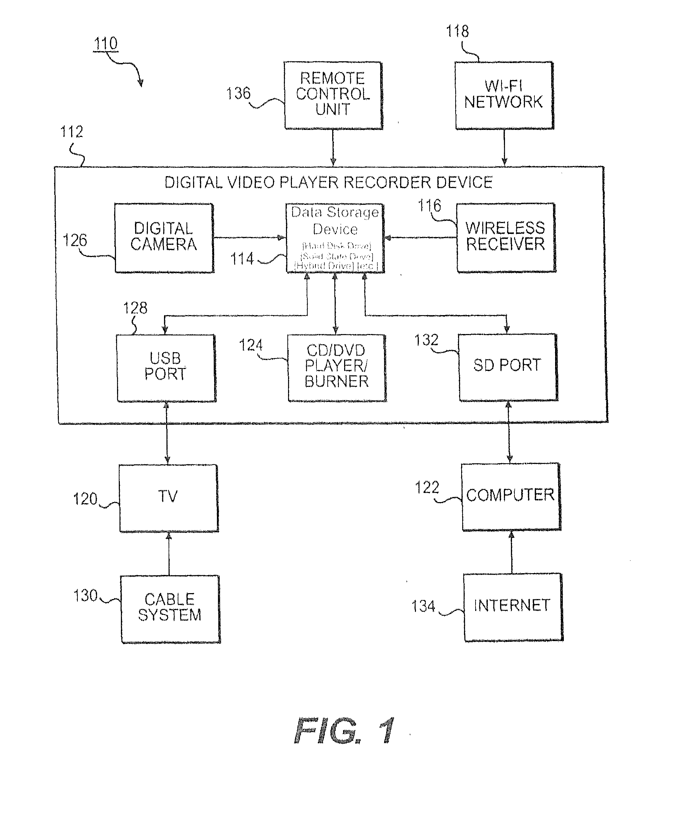

As shown in Figure **1****,** the present invention is a video audio player recorder device **110** which comprises a housing **112.** A hard drive **114** is built in the housing **112.** A wireless receiver **116** is built in the housing **112** and is electrically connected to the hard drive **114.** The wireless receiver **116** can receive media information from a Wi-Fi network **118** and a built-in data streaming software allows downloading the media information from the Internet to the hard drive **114** for storage. The built-in data streaming software also allows the hard drive **114** to play back the media information to a remote television set **120** or a computer **122** for a person **123.** The device **110** can be about **6** inches (15.2cm) (width) x **12** inches (30.5cm) (length) x **1.5** inches (3.8cm) (thickness) in sizes. Other sizes are, however, possible.

A CD/DVD player/burner 124 is built-in the housing **112** and electrically connected to the hard drive **114,** whereby music and movies can be directly loaded onto the hard drive **114.** A digital camera **126** is built-in the housing **112** and is electrically connected to the hard drive **114,** whereby the digital camera **126** can send pictures directly to the hard drive **114.**

A USB port **128** built in the housing **112** and is electrically connected to the hard drive **114.** The television set **120** connected to a home cable system **130** can be wired to the USBV port **128** to send media information directly to the hard drive **114.** A SD port **132** is built in the housing **112** and is electrically connected to the hard drive **114.** The computer **122** connected to the internet **134** can be wired to the SB port **132** to send media information directly to the hard drive **114.** The device **110** further comprises a remote control unit **136** to operate the device **110.** The device uses **110** Volt power source, but could use any other appropriate power source, such as a **220** or **240** volt power source.

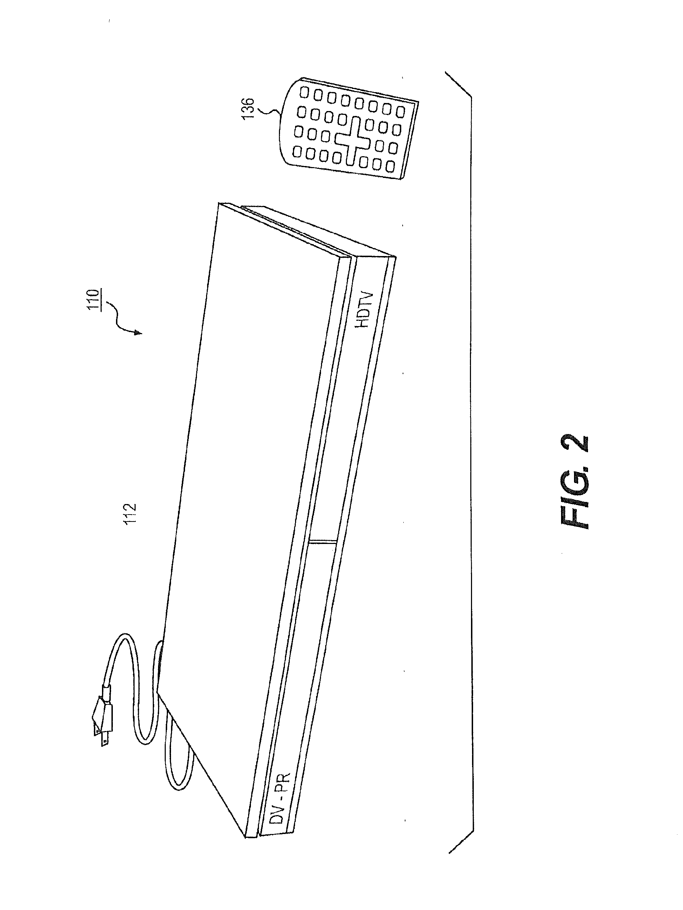

Figure **2** shows a perspective view of the video audio player recorder device **110** and the remote control unit **136.**

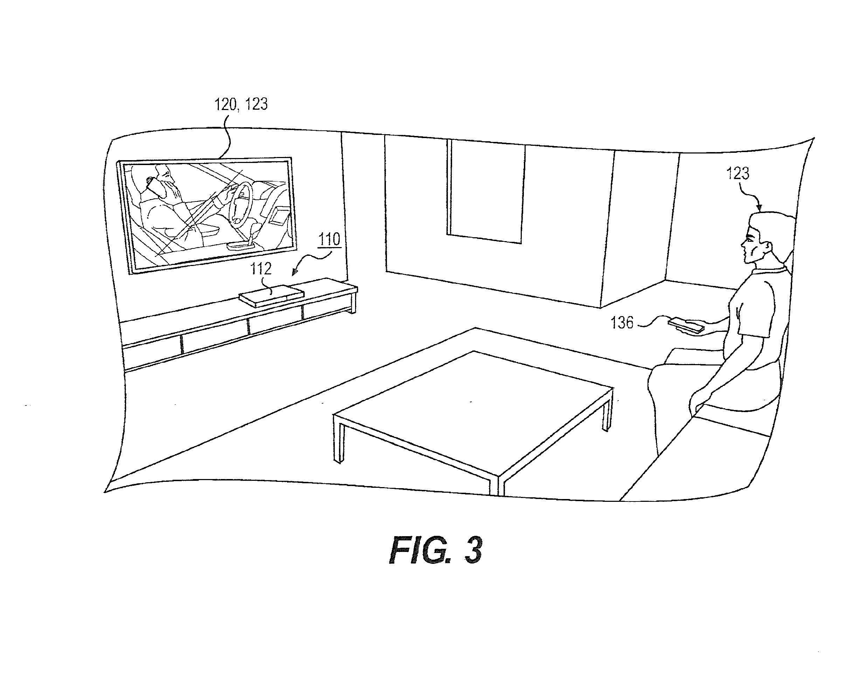

Figure 3 shows a perspective view of the person **123** utilizing the remote control unit **136** to operate the remote television set **120.**

In review, the video audio player recorder device **110** provides a person 123 with an efficient way of organizing and viewing their media library. The present invention is an electronic apparatus that is available in various models (different shapes and sizes). It can be connected directly to a remote television set **120** or computer **122** if desired. The device **110** functions similar to a digital video recorder. It has the ability to download from the internet **134** or record media information at a set time and date from the home cable system **130.** The device **110** includes a housing **112** with a built in hard drive **114** to receive media information from a Wi-Fi network **118.** Movies, music, and shows may be purchased from a website or other forum and downloaded directly to the built in hard drive **114** using the Wi-Fi network **118.** The Wi-Fi network **118** can be a mobile virtual private network is used for roaming seamlessly across networks and in and out of wireless-coverage areas without losing application sessions or dropping the secure VPN session. A conventional VPN cannot survive such events because the network tunnel is disrupted, causing applications to disconnect, time out, or fail, or even cause the computing device itself to crash. Instead of logically tying the endpoint of the network tunnel to the physical IP address, each tunnel is bound to a permanently associated IP address at the device **110**. The mobile VPN software handles the necessary network authentication and maintains the network sessions in a manner transparent to the application and the user.

The device **110** also includes a USB port **128,** SD port **132,** the ability to download and play internet games, a digital camera **126,** a wireless receiver **116,** and the ability to run applications. The device **110** can also be operated by using a remote control unit **136.** It also includes a CD/DVD player/burner **124,** so that movies and music may be loaded onto the hard drive **114.** The device **110** allows the person **123** to organize their media information in a variety of ways, such as by category, genre, or by favorites. The device **110** is able to be used in all rooms of the house. This allows the person **123** to access their media information from anywhere in the home. The exact specifications may vary.

It will be understood that each of the elements described above, or two or more together, may also find a useful application in other types of constructions differing from the types described above.

While the invention has been illustrated and described as embodiments of a video audio player recorder device, accordingly it is not limited to the details shown, since it will be understood that various omissions, modifications, substitutions and changes in the forms and details of the device illustrated and its operation can be made by those skilled in the art without departing in any way from the spirit of the present invention.

Without further analysis, the foregoing will so fully reveal the gist of the present invention that others can, by applying current knowledge, readily adapt it for various applications without omitting features that, from the standpoint of prior art, fairly constitute characteristics of the generic or specific aspects of this invention.
The foregoing exemplary descriptions and the illustrative preferred embodiments of the present invention have been explained in the drawings and described in detail, with varying modifications and alternative embodiments being taught. It is also worth noting features, designs, memory, hard drives and etc. may vary with each model and as technology advances components, features, functions, hardware/software and the likes may be added, removed or modified to further update and upkeep the Digital Video Player recorder. While the invention has been so shown, described and illustrated, it should be understood by those skilled in the art that equivalent changes in form and detail may be made therein without departing from the true spirit and scope of the invention, and that the scope of the present invention is to be limited only to the claims except as precluded by the prior art. Moreover, the invention as disclosed herein may be suitably practiced in the absence of the specific elements which are disclosed herein.

## Claims

1. A video audio player recorder device which comprises:
a) a housing;
b) a data storage device built in the housing; and
c) a wireless receiver and transmitter built in the housing and electrically connected to the hard drive, the wireless receiver can receive media information from a Wi-Fi and/or other networks and
d) a built-in data streaming software allows downloading the media information from the Internet to the hard disk drive for storage, whereby the built-in data streaming software can play back the media information to a remote television set, computer, smartphone or other compatible devices at any location.

2. The device as recited in Claim 1, further comprising a CD/DVD player/burner built in the housing and electrically connected to the hard disk drive, whereby music and movies can be directly loaded onto the hard drive.

3. The device as recited in Claim 2, further comprising a digital web camera built in the housing and electrically connected to the hard drive, whereby the digital camera can send pictures, videos directly to the hard drive or a computer, smartphone, etc, via Internet.

4. The device as recited in Claim 3, further comprising a Data port [USB] [etc] built in the housing and electrically connected to the hard disk drive, whereby the television set connected to a home cable system can be wired to the USB port to send media information directly to the hard disk drive.

5. The device as recited in Claim 4, further comprising a [Memory card Slot/Port] SD port or etc. built in the housing and electrically connected to the hard disk drive, whereby the computer connected to the Internet can be wired to the SD port to send media information directly to the hard disk drive.

6. The device as recited in Claim 5, further comprising a remote control unit to operate the device.

7. The device as recited in any preceding Claim, wherein the Wi-Fi network can be a Virtual Private Network.

8. The device as recited in any preceding Claim, wherein the device uses 110 Volt power source.

9. The device as recited in Claim 1, wherein the device is about 6 inches (15.2cm) (width) x 12 inches (30.5cm) (length)x 1.5 inches (3.8cm) (thickness) in size.

10. The device as recited in any preceding Claim, wherein the storage device comprises one or more of a hard disk drive, solid state drive or hybrid drive.

11. The device as recited in any preceding Claim, further comprising a processor.
